Europäisches Patentamt

European Patent Office

Office européen des brevets

(19)

(11) Publication number:   0 160 957

A2

(12)   **EUROPEAN PATENT APPLICATION**

(21) Application number: 85105488.2

(22) Date of filing: 04.05.85

(51) Int. Cl.⁴: C 09 D 3/80
C 08 F 265/00

(30) Priority: 07.05.84 US 607789

(43) Date of publication of application:
13.11.85 Bulletin 85/46

(84) Designated Contracting States:
BE DE FR GB IT NL

(71) Applicant: DeSOTO, INC.
1700 South Mt. Prospect Road
Des Plaines Illinois 60018(US)

(72) Inventor: Murphy, Edward J.
1205 Cottonwood
Mt. Prospect, Ill. 60056(US)

(72) Inventor: Moschovis, Elias P.
8106 Marmora
Morton Grove Ill. 60053(US)

(74) Representative: Reitzner, Bruno, Dr.
Patentanwälte Dipl.-Ing. R. Splanemann Dr. B. Reitzner
Tal 13
D-8000 München 2(DE)

(54) Adherent ultraviolet cured coatings.

(57) An ultraviolet-curable liquid coating composition is disclosed which exhibits improved adhesion to metal and plastic surfaces. This composition comprises, in admixture: (1) from 10% to 60% of the mixture of an organic solvent-soluble solution copolymer of monoethylenically unsaturated monomers free of amine functionality and including from 5% to 20% of an amide of a monoethylenically unsaturated monocarboxylic acid, especially dimethyl acrylamide; and (2) from 40% to 90% of the mixture of radiation-curable ethylenically unsaturated liquid, preferably including a polyacrylate, such as pentaerythritol polyacrylate, said coating composition including photoinitiators and/or photosensitizers, and especially ketonic photoinitiators, rendering the composition sensitive to ultraviolet light. These components are usually present in solution in an organic solvent. The copolymer desirably contains from 0.5% to 10% of a monoethylenically unsaturated carboxylic acid, like acrylic or methacrylic acid, and may contain at least 2% of an alkanol ether of N-methylol acrylamide or N-methylol methacrylamide and a strong acid catalyst may be present to enable a low temperature cure following the ultraviolet cure. A polyepoxide may also be present in the composition to aid intercoat adhesion.

-1-

# ADHERENT ULTRAVIOLET CURED COATINGS

## DESCRIPTION

### Technical Field

This invention relates to ultraviolet-curable liquid coating compositions exhibiting improved adhesion to various substrates, especially to metal and plastic surfaces. The coating of metal surfaces which have been deposited on various surfaces by vacuum metallization (usually chromium deposited by vacuum sputtering) is particularly contemplated.

### Background Art

Coatings which cure rapidly on exposure to ultraviolet light are well known, but these are usually poorly adherent to metal and plastic surfaces. Chromium and chromium alloy surfaces are particularly difficult to adhere to. The vacuum deposited chromium alloy surfaces require overcoating to protect them, and this is now done with thermally cured coatings. The purpose is to protect the metal surface from abrasion and moisture, as is encountered on exterior exposure. This is now carried out using a two-package system in which an hydroxy functional polymer and an organic polyisocyanate are mixed and applied and then reacted at moderate temperature to form a polyurethane coating. Adhesion to the chromium alloy surface is less satisfactory than desired, and the cure is slow.

In an effort to provide liquid ultraviolet-curable coating compositions which will cure rapidly to form a strongly adherent coating on metal and plastic surfaces, including vacuum deposited chromium alloys, and which will protect these surfaces against abrasion, moisture and organic solvents, one of us and R. J. Lewarchik previously

-2-

found that tertiary amine-containing copolymers could be combined with radiation-curable polyethylenically unsaturated liquids and appropriate photoinitiators and/or photosensitizers rendering the composition sensitive to ultraviolet light, to provide the desired rapid cure combined with good adhesion.

This invention is directed to liquid ultraviolet-curable coating compositions of the character noted above and which are characterized by faster cure, better stability and better resistance to exterior exposure.

Disclosure of Invention

In accordance with this invention, it has been found that organic solvent solution copolymers of monoethylenically unsaturated monomers free of amine functionality and including a critical proportion of an amide of an alpha, beta-monoethylenic monocarboxylic acid, especially acrylic or methacrylic acid, may be used in admixture with radiation-curable ethylenically unsaturated liquid, it being preferred that at least a portion of the unsaturated component is polyethylenically unsaturated. Appropriate photoinitiators and/or photosensitizers should be present to render the composition sensitive to ultraviolet light, and thereby provide coatings which cure rapidly on ultraviolet exposure. These materials are placed in a liquid medium having coating viscosity, usually using at least about 10%, preferably from 25% to 50% of inert volatile organic solvent. The solvent is preferably alcoholic to enable thermoplastic surfaces to withstand its presence. The result is liquid coating compositions which cure to form good films when applied as a coating and cured by exposure to ultraviolet light, and which are strongly adherent to the metal or plastic substrate to which they are applied and which exhibit good resistance to exterior exposure. The coating of vacuum deposited chromium alloy is illustrative of a particularly difficult adhesion task, and it will be used to establish the achievement of superior adhesion, though the invention is not limited to this particular coating utility, as discussed hereinafter.

The solution copolymer will constitute from 10% to 60% of the mixture, and the ethylenically unsaturated component will constitute from 40% to 90% of the mixture. Since the copolymer importantly contributes to the character of the resulting cured film and its adhesion to the substrate, it is preferred to mazimize its proportion, and for this reason it is desired to have the solution copolymer present in an amount of from 40% to about 60%. Indeed, it is desired to come as close to the maximum proportion as possible. Above about 60%, the film properties fall off rapidly because there is too little radiation-curable ethylenically unsaturated material present in the film, and since the exact maximum proportion of copolymer solids will vary somewhat with the selection and proportioning of the monomers in the copolymer, the upper limit cannot be specified more exactly.

The solution copolymer will consist essentially of copolymerized monoethylenically unsaturated monomers, preferably including a major proportion of acrylic or methacrylic acid esters, and from 5% to 20% of the above-described amide monomer, especially N, N'-dimethyl acrylamide, conveniently referred to as dimethyl acrylamide.

All proportions herein are by weight, unless otherwise stated, and they are important because, unless the proportion of copolymerized amide in the copolymer is within the narrow limits stated, viz., 5% to 20%, the properties of the cured coatings obtained on ultraviolet exposure are not satisfactory. With too little amide content in the copolymer, the ultraviolet cure is not satisfactory, and the adhesion, mechanical resistance and moisture resistance fall off. Best results are obtained using from 11% to 16%. When more than 20% of the amide monomer is present in the copolymer, there are too many polymerization sites, and the properties of the cured coatings are again inadequate.

The copolymers which are used herein should be solution copolymers to provide the solubility desired to adequately distribute the copolymer into the liquid portion of the coating compositon. Solution copolymerization is itself well known and indicates that the monomers and the polymers are soluble in the organic solvent in which the polymerization is carried out.

It is desirable that at least 40% of the copolymer be copolymerized methyl methacrylate, since this provides desirable physical characteristics, but this is not essential. The balance of the copolymer, except for the amide monomer, is desirably constituted by monomers having no reactive group other than the single ethylenic group. It is also preferred to include in the composition at least 15% of $C_2$-$C_{12}$ alkyl ester of acrylic or methacrylic acid, such as butyl acrylate, 2-ethylhexyl acrylate and isobutyl methacrylate. Styrene, vinyl toluene and vinyl acetate will further illustrate the monomers which may be present, especially in minor amount.

It is preferred to include from 0.5% to 10% of a monoethylenically unsaturated carboxylic acid, such as acrylic acid, methacrylic acid, crotonic acid, maleic acid, and the like, because these improve the compatibility of the copolymer in the radiation-curing coating composition as well as the adhesion of the coating to the substrate. Acrylic and methacrylic acids are preferred, and the preferred proportion of the acid monomer in the copolymer is from 1% to 3%. It is stressed that these acids are difficult to include in amine-functional copolymers because amine salt formation increases the viscosity and decreases the solubility of the copolymer. This is one significant reason why the capacity to function in the absence of amine-functional monomers is so important.

Any copolymerizable amide of a monoethylenically unsaturated monocarboxylic acid may be employed, regardless of whether the amide is substituted or unsubstituted. The absence of amine functionality produces several benefits, as will be discussed. The monocarboxylic acids used to form the amide are preferably acrylic or methacrylic acid. Unsubstituted amides are illustrated by acrylamide and methacrylamide. Substituted amides, like methyl acrylamide, ethyl acrylamide and dimethyl acrylamide, and also the corresponding methacrylamides, are all useful herein. Dimethyl acrylamide is especially effective, and is particularly preferred because it allows the incorporation of auxiliary reactive resins, such as polyepoxides like bisphenol-based diglycidyl ethers or epoxidized novalac resins. as will be later discussed.

Up to about 30% of the mixture of solution copolymer and polyethylenic liquid may be constituted by some other monoethylenic or polyethylenic material, though these need not be present. It is preferred to have at least about 3% of these additive components, most preferably from 5% to 20%. These materials are illustrated by triallyl cyanurate, vinyl pyrrolidone and dimethyl acrylamide.

The preferred polyethylenically unsaturated materials are polyacrylate oligomers and liquid polyacrylates, like trimethylol propane triacrylate or pentaerythritol triacrylate, though any ethylenically unsaturated material which will respond to ultraviolet radiation in the presence of appropriate photoinitiators or photosensitizers may be used. Methacrylate unsaturation responds more slowly, but can be used. The useful methacrylates correspond to the above acrylates. The preferred liquid polyacrylates are hydroxy-functional, such as trimethylol propane diacrylate and pentaerythritol‾ triacrylate. Diacrylates are also useful, as illustrated by 1,6-hexane diol diacrylate.

Other liquid polyacrylates are provided by reacting hydroxy acrylates, like 2-hydroxyethyl acrylate, with isocyanate functional monomers and oligomers, like isophorone diisocyanate and the oligomer formed by reacting a stoichiometric excess of isophorone diisocyanate with a polypropylene glycol of molecular weight 400.

The term "polyacrylate" as used herein denotes a plurality of acrylic acid ester groups, and this is an accepted use of this language.

While polyethylenically unsaturated liquids are preferred, one can use these alone or together with radiation-curable monoethylenically unsaturated liquids, like ethylhexyl acrylate, butyl acrylate, methyl acrylate, N-vinyl pyrrolidone, and the like.

To insure the desired solvation of the

-7-

copolymer into the liquid portion of the coating composition and to provide coating viscosity, it is preferred to have present an inert volatile organic solvent. At least about 10% of solvent is sometimes sufficient for these purposes, but more is usually needed. Since it is desired when coating thermoplastic substrates to employ as little heat as possible, solvents which vaporize rapidly at room temperature or slightly elevated temperature are preferred. Also, the substrate coated (whether metallized or not) is frequently sensitive to heat and/or strong organic solvents, as when the substrate is constituted by ABS (a polymer of acrylonitrile, butadiene and styrene), polycarbonate resin or polystyrene, and the like. In such instances, the solvent should have little capacity to dissolve thermoplastic substrates. It is thus preferred to have present at least about 30% of the solvent medium of a $C_1$ to $C_4$ alkanol, especially isopropanol, and to have the balance of the solvent constituted by butyl acetate, preferably in admixture with a small proportion of a ketone, such as acetone or methyl amyl ketone. It is especially preferred to use from 25% to 50% of solvent based on the solution.

Conventional photosensitizers and/or photoinitiators are added to the liquid coating compositions of this invention. These render the unsaturated liquid mixture sensitive to ultraviolet light, as is well known, and are illustrated in the Examples. Ketonic photo-initiators, such as benzophenone, acetophenone, and diethoxyacetophenone are well known photoinitiators, and these are particularly effective in combination with the amide copolymer-containing systems of this invention. It is preferred to use benzophenone, either alone or in

-8-

combination with diethoxyacetophenone. These Examples also illlustrate the addition of auxiliary agents for known purpose.

It is also desirable to supplement the ultraviolet cure with a low temperature bake using an N-methylol ether monomer, like an alkanol ether of N-methylol acrylamide or N-methylol methacrylamide, in the copolymer, and an acid catalyst to lower the curing temperature. Isobutyl alcohol is a suitable alkanol, and others are described hereinafter. The incorporation of polyepoxides is also helpful in providing a low temperature auxiliary cure.

The presence of a polyepoxide in the ultraviolet-cured coating increases intercoat adhesion, as between primers and the coating of this invention used as a topcoat, or the coating of this invention used as a primer and other coatings as topcoats. These polyepoxides are used in amounts of from 2% to 20% of the weight of the nonvolatile portion of the coating composition, and preferably have a molecular weight in the range of from about 500 to about 5,000. They are illustrated by a diglycidyl ether of bisphenol A having an average molecular weight of about 1,000. The use of polyepoxides in the coating composition is a feature of this invention because these are unstable in the presence of amine functionality, though they are stable in the presence of amide functionality.

The acid catalyst may be at least 1%, preferably at least 2%, of sulfuric acid, as taught in U.S. Patent No. 4,331,719, or a long chain dialkyl napthalene disulfonic acid, as taught in U.S. Patent No. 4,404,308. The amide copolymers of this invention are better adapted to tolerate the acid catalysis needed for a low temperature supplemental cure, and this is a feature of this invention.

The N-methylol ether monomers noted above are particularly illustrated by $C_2$-$C_8$ alkanol ethers, and especially butyl ethers, like isobutoxymethyl acrylamide and isobutoxymethyl methacrylamide. The ether group stabilizes the N-methylol functionality in the presence of the acid catalysis, so when the bake removes the etherifying alcohol, the N-methylol reactivity is regenerated to provide an effective supplemental low temperature cure. Ethyl alcohol and isopropanol will further illustrate the useful etherifying alcohols.

The N-methylol-functional monomer is desirably used in an amount of at least 2% of the copolymer. Since these monomers are usually amide derivatives, their maximum proportion is limited by the maximum amide monomer content noted previously.

The N-methylol cure is preferably with hydroxy functionality which may be provided in various ways. The amide copolymer may contain from 1% to 15%, preferably from 2% to 10%, of an hydroxyalkyl ester of acrylic or methacrylic acid, the alkyl group containing from 2 to 4 carbon atoms, especially 2-hydroxyethyl acrylate or 2-hydroxypropyl acrylate. One can also use the hydroxy functionality contained in the polyacrylate component, such as in trimethylol propane diacrylate or pentaerythritol triacrylate. One can also add a polyol having low volatility as part of the solvent, such as a propylene oxide adduct of trimethylol propane having an average molecular weight of about 400.

It is preferred to use as the catalyst from 3% to 12% of the copolymer of dioctyl or dinonyl naphthalene disulfonic acid, preferably from 6% to 9%.

The solvent solution coating compositions of

-10-

this invention are normally applied in any desired fashion to provide a film having a thickness adequate to provide a dry film having a thickness of from 0.25 to 3 mils, but preferably about 1 mil. The wet film is then allowed to thicken by vaporization of volatiles which is usually carried out at room temperature over a period of from 5 to 10 minutes. The thickened wet coating from which the bulk of the solvents has been removed by vaporization is then exposed to ultraviolet light to rapidly cure the coating. Using a flux density of 0.02 Watts/cm$^2$ at 270 nanometers as illustrative, it is found that a good cure is obtained in about 20 seconds for typical coating compositions.

The invention is illustrated in the following Examples which show preferred operation of this invention.

Acrylic Polymer #1

60 parts of methyl methacrylate, 30 parts of 2-ethylhexyl acrylate, and 10 parts of dimethyl acrylamide are polymerized in a 55% solution in a 2/1 solvent blend of isopropanol/butyl acetate to provide a 55% copolymer solution.

Acrylic Polymer #2

60 parts of methyl methacrylate, 35 parts of 2-ethylhexyl acrylate, and 5 parts of dimethyl acrylamide are polymerized in a 55% solution in a 2/1 solvent blend of isopropanol/butyl acetate to provide a 55% copolymer solution.

Acrylic Polymer #3

60 parts of methyl methacrylate, 35 parts of 2-ethylhexyl acrylate, and 5 parts of isobutoxymethyl acrylamide are polymerized in a 55% solution in a 2/1 solvent blend of isopropanol/butyl acetae to provide a 55% copolymer solution.

Acrylic Polymer #4

60 parts of methyl methacrylate, 32 parts of 2-hydroxyethyl acrylate, and 8 parts of isobutoxymethyl acrylamide are polymerized in a 55% solution in a 2/1 solvent blend of isopropanol/butyl acetate to provide a 55% copolymer solution.

Other Coating Components:

| Component | Supplier | Identification |
|-----------|----------|----------------|
| N-vinyl pyrrolidone | GAF | NVP |
| Trimethylolpropane triacrylate | Celanese | TMPTA |
| pentaerythritol triacrylate | Ware | PETA |
| Urethane triacrylate oligomer | Thiokol | Uvithane 788 |
| Urethane triacrylate oligomer | Polychrome | Uvimer 530 |
| Triallyl cyanurate | American Cyanamid | TAC |
| Benzophenone | Aldrich | --- |
| Diethoxy acetophenone | Union Carbide | DEAP |
| Dimethoxyphenyl acetophenone | Ciba-Geigy | Irgacure 651 |
| Dinonyl naphthalene disulfonic acid | King Ind. | DNDSA |

-12-

Ultraviolet Cure Topcoat Formulations:

| Component | Parts By Weight | | | | | |
|---|---|---|---|---|---|---|
| | A | B | C | D | E | F |
| Acrylic #1 | | | | 44 | | |
| Acrylic #2 | 44 | | | | 36 | |
| Acrylic #3 | | 36 | | | | |
| Acrylic #4 | | | 36 | | | 36 |
| TMPTA | 10 | | | | | |
| PETA | | 8 | 8 | 12 | 8 | 8 |
| Uvimer 530 | | 8 | | | 8 | 8 |
| Uvithane 788 | | | 8 | | | |
| NVP | 15 | 4 | 4 | 4 | | |
| TAC | | | | | 4 | 4 |
| DNDSA | | | | | | 0.5 |
| Benzophenone | 2.4 | 1.6 | 1.6 | 1.6 | 1.6 | 1.6 |
| DEAP | | | | 1.6 | | |
| Irgacure 651 | | 1.6 | 1.6 | | | |
| Butyl acetate | 20 | 29 | 29 | 25.7 | 29 | 29 |
| Isopropanol | 6 | 8 | 8 | 7.4 | 8 | 8 |
| Methyl ethyl ketone | 3 | 4 | 4 | 3.7 | 4 | 4 |

The coating components are blended under mild agitation to provide homogeneous coating solutions of approximately 40% solids by weight and viscosity of about 20 seconds with a #2 Zahn cup. It may be desired to make further additions of various surface active agents to aid in flow out and/or prevention of surface defects as is well known. It may further be desired to add small quantities of commercially known and available agents to enhance the cured film exterior durability such as a hindered amine ultraviolet absorber from Ciba-Geigy under the trade designation Tinuvin 292.

Application

The coating compositions are sprayed on a chromium vapor deposit on a thermoplastic molding in a layer which, after curing, is one mil thick. The wet coatings are allowed to dry in air for about 7 minutes to remove volatiles, and the thickened coatings so-provided are subjected to ultraviolet light having a wavelength of 270 nanometers with a flux density of 0.02 Watts/cm$^2$ for 20 seconds to cure the same. The cured coatings are abrasion resistant and strongly adherent to the chromium surface. The coating serves to protect the chromium surface from the degradative influences of exterior exposure. The final products are normally used in automobiles, so the need for exterior durability and abrasion resistance will be manifest.

Formulation F was also post-baked at 230°F. for 5 minutes, and the post-bake enhanced hardness and abrasion resistance.

Acrylic Polymer #5

Acrylic polymer #1 is repeated with the addition to the monomer which are copolymerized of 2%, based on total monomers, of acrylic acid. The resulting polymer solution is then combined with PETA and Uvithane 788 to provide a liquid mixture containing 36 parts of copolymer solids, 8 parts of PETA and 12 parts of Uvithane 788. 2.4 parts of benzophenone are used as photoinitiator, and the final coating composition contains 29 parts of butyl acetate 8 parts of isopropanol and 4 parts of methyl ethyl ketone. On application and cure as previously described it forms a more strongly adherent film. The acrylic acid in the copolymer improved the compatibility with the Uvithane 788, allowing a larger proportion of this component to be used.

As a further illustration of this invention, acrylic copolymer 1 is combined with a diglycidyl ether of bisphenol A having an average molecular weight of about 1,000 (Shell product Epon 1001 can be used) and PETA in amounts to provide 36 parts of copolymer solids, 10 parts of the polyepoxide and 10 parts of PETA. 2.4 parts of benzophenone are used as photoinitiator and the final coating composition contains 29 parts of butyl acetate 8 parts of isopropanol and 4 parts of methyl ethyl ketone. Improved intercoat adhesion is observed, especially when this coating is used as a primer and is overcoated with conventional topcoats.

While the coating of vacuum deposited metal surfaces is an important utility for this invention, and has been illustrated, many other coating purposes can be served. When vacuum deposited metal is to be overcoated, the coatings will normally be transparent. The compositions of this invention are also effective to seal the surface porosities in fiber-reinforced plastics, especially glass fiber-reinforced polyester resin substrates, in which case the coating may be pigmented, but is preferably also transparent. The coating compositions of these examples may be applied and cured for various purposes in the same way illustrated herein.

While the most significant uses now known have been noted, other similar utilities will be evident to those skilled in the art, and the improved adhesion to metal and plastic surfaces is consistently beneficial.

CLAIMS

1. An ultraviolet-curable liquid coating composition exhibiting improved adhesion to metal and plastic surfaces comprising, in admixture; (1) from 10% to 60% of the mixture of an organic solvent-soluble solution copolymer of monoethylenically unsaturated monomers free of amine functionality and including from 5% to 20% of an amide of a monoethylenically unsaturated monocarboxylic acid; and (2) from 40% to 90% of the mixture of radiation-curable ethylenically unsaturated liquid, said coating composition including photoinitiators and/or photosensitizers rendering the composition sensitive to ultraviolet light.

2. A coating composition as recited in claim 1 in which said ethylenically unsaturated liquid includes polyethylenically unsaturated material and the named components are present in solution in at least about 10% of inert volatile organic solvent.

3. A coating composition as recited in claim 2 in which said solution contains from 25% to 50% of said solvent which contains at least 30% of a $C_1$ to $C_4$ alkanol. said copolymer includes from 0.5% to 10% of copolymerized monoethylenically unsaturated carboxylic acid.

4. A coating composition as recited in claim 2 in which said amide is an amide of acrylic or methacrylic acid.

- 2 -

0160957

5. A coating composition as recited in claim 4 in which at least 40% of said copolymer is copolymerized methyl methacrylate, at least 15% of the copolymer is copolymerized $C_2$-$C_{12}$ alkyl ester of acrylic or methacrylic acid, and said amide is dimethyl acrylamide.

6. A coating composition as recited in claim 4 in which said composition further includes from 2% to 20% of a polyepoxide having a molecular weight of from about 500 to about 5,000.

7. A coating composition as recited in claim 2 in which said components (1) and (2) are present in a weight ratio of 40:60 to 60:40.

8. A coating composition as recited in claim 1 in which said polyethylenically unsaturated liquid is an hydroxy-functional polyacrylate.

- 9. A coating composition as recited in claim 1 in which said coating composition includes from 3% to 30% of the weight of said mixture of ethylenically unsaturated liquid selected from the group consisting of triallyl cyanurate, N-vinyl pyrrolidone and dimethyl acrylamide.

10. A coating composition as recited in claim 1 in which said composition is rendered sensitive to ultraviolet light using a ketonic photoinitiator.